# EUROPEAN PATENT APPLICATION

(11) **EP 1 160 702 A1**
(43) Date of publication of application: **05.12.2001**
(21) Application number: 01111987.2
(22) Date of filing: 22.05.2001
(51) Int. Cl.: G06F 17/60

(54) **Method of and system for advertising, and computer product**

(30) Priority: 29.05.2000 JP 2000158994
(71) Applicant: Isao Corporation, Tokyo 107-6032 (JP)
(72) Inventor: Takakura, Tetsuo, Tokyo 107-6032 (JP); Sato, Masaomi, Shinjuku-ku, Tokyo 163-0227 (JP)
(74) Representative: Schwabe - Sandmair - Marx

(57) **Abstract**

The advertising system allows the server device (3) to transmit advertising data to many client devices (1). The server device (3) includes attribute information DB (31) and URL history information DB (32) each of which stores information related to the users. Advertising information DB (33) stores advertising data. Advertisement selection section (36c) and transmission data generation section (36d) generate advertisement transmission data.

## Description

### FIELD OF THE INVENTION

The present invention relates to a technology in which a server device transmits various advertisements to each of client devices so as to allow it to make an output.

### BACKGROUND OF THE INVENTION

Conventionally, with respect to advertising media, television broadcasting has been overwhelmingly influential as a leader of the mass media. The television broadcasting has established a business model in which advertisements are broadcasted while advertising fees are collected from the advertisers so that various programs are broadcasted free of charge.

In recent years, however, the Internet has come to spread as a new advertising medium. For example, advertisements using stationary images, referred to as banner advertisements, are placed on Web pages that are viewed through, for example, the WWW (World Wide Web) . In this case, however, such advertisement fees are generally paid to the owners of the Web pages, and no fees come to service providers (ISP) of the Internet lines. Therefore, at present, it is necessary for the ISPs to collect connection fees from the Internet users.

Here, the Internet, which has a bi-directional property, has been recognized as a medium completely different from television. However, along with the development of digitized images, television also has come to have bi-directional communications, thereby making both of the media closer to each other.

For this reason, there have been ever-increasing demands for the Internet to provide the same kinds of conveniences as television, and many people demand for low costs or free of charge with respect to the connection fees of the Internet. With respect to a business model for achieving such free of charge, etc., it has been proposed that the ISPs play a main role to provide advertisements in the same manner as television, and in fact, some ISPs have realized such a business model.

Moreover, from the technical point of view, various systems have been proposed in which the ISPs are allowed to play a main role to distribute advertisements. For example, Japanese Patent Application Laid-Open No. 9-325938 discloses a system in which advertising data, stored in a HD (Hard Disk) in a computer, is displayed at the time of activating an application or during an access time to the network. Moreover, Japanese Patent Application Laid-Open No. 10-107850 discloses a system in which advertising data is transmitted from a provider to terminals and the advertising data is displayed on the terminals.

However, such conventional advertising systems are still only imitations of the conventional television advertisements, and it cannot be said that the properties of the Internet, such as the bi-directional property, are fully utilized.

For example, in the conventional advertising systems, the server side selects advertisements and distributes them in one-sided manner; therefore, neither user's interest nor taste has been reflected to the contents thereof. The resulting problem is that, since advertisements in which the users are not interested are often displayed, the advertisements do not draw so much attention, and are poor in the advertising effects and publicity.

Therefore, one of the objects of the present invention is to provide an advertising system which can carry out advertisements having contents suitable for the interests and tastes of the users, and consequently improve the advertising effects and publicity.

The advertisements are mainly classified into image advertisements and sound advertisements, and in the conventional advertising systems, an image advertisement and a sound advertisement are simply carried out simultaneously or only either of the image advertisement and the sound advertisement is carried out in a fixed manner. In other words, with respect to the output states of the advertisements, nothing has been taken into consideration as to the conditions on the user side, and for example, a large amount of image advertisements tend to be transmitted to users who only have poor communication environments, resulting in inconveniences on the user side.

Therefore, another object of the present invention is to provide an advertising system which carries out advertisements in accordance with the communication environments and states of use so that it is possible to avoid causing any inconvenience to the user.

Moreover, the conventional advertising systems are arranged so as to simply output advertisements during a waiting time of the user. In this arrangement, it is said that the conditions on the user side are taken into consideration to a certain extent, and the advertising effects are improved; however, this is not sufficient. In other words, the same kinds of advertisements are distributed without taking it into consideration the time at which the user views and hears the advertisements; therefore, for example, even in the morning, those advertisements that are supposed to be distributed at mid night might be distributed, resulting in degradation in the advertising effects and publicity.

Moreover, among advertisements, some of them are effective if they are repeatedly outputted many times as short programs, and others are effective if they are outputted even only once as long programs. However, in the conventional advertising systems, the number of outputs of one advertisement is simply set to a fixed number, and it is not possible to adjust the number thereof. Therefore, those advertisements as short programs might be outputted only once, failing to obtain the advertising effects and publicity; or those advertisements as long programs might be outputted several times, giving an unpleasant image to the user; thus, the advertising effects and publicity tend to be lowered. In particular, in the case when an advertisement is outputted several times in a system that is arranged so as to output any advertisement only once, data transmissions have to be carried out several times, and this has formed a major reason for an increased communication load.

Therefore, still another object of the present invention is to provide an advertising system which can readily adjust the output states, such as the output time and the number of outputs, of an advertisement so that it becomes possible to increase the advertising effects and publicity to a maximum.

### SUMMARY OF THE INVENTION

The advertising system according to one aspect of this invention transmits advertising data from a server device to client devices. In this advertising system the server device includes a user information storage which stores information related to users of the respective client devices; an advertising information storage which stores a plurality of advertising data that have different advertising contents; an advertisement selection unit which, based upon the information stored in the user information storage, selects advertising data to be transmitted to the client devices from a plurality of advertising data stored in the advertising information storage; and a transmission data generation unit which generates advertisement transmission data so as to transmit the advertising data selected by the advertisement selection unit to the client devices.

The advertising system according to another aspect of this invention transmits advertising data from a server device to client devices. In this advertising system the server device includes a communication speed detection unit which detects the communication speed between the server and each of the client devices; an advertising information storage which stores a plurality of advertising data that have mutually different data formats; and a transmission data generation unit which, based upon the communication speed detected by the communication speed detection unit, selects advertising data having the corresponding data format, and generates advertisement transmission data for transmitting this advertising data to the client device.

The advertising system according to still another aspect of this invention transmits advertising data from a server device to client devices. In this advertising system the server device includes an advertising information storage which stores a plurality of advertising data that have mutually different data formats; an advertisement selection unit which selects advertising data to be transmitted to the client devices from a plurality of advertising data stored in the advertising information storage; and a transmission data generation unit which generates advertisement transmission data so as to transmit the advertising data selected by the advertisement selection unit to the client devices. The transmission data generation unit being allowed to add control information for controlling the output format of the advertising data in the client devices to the advertisement transmission data .

The advertising method according to still another aspect of this invention realizes transmission of advertising data from a server device to client devices. In this advertising method the server device performs the steps of storing information related to users of the respective client devices; storing a plurality of advertising data that have different advertising contents; based upon the information stored at the user information storing step, selecting advertising data to be transmitted to the client devices from a plurality of advertising data stored at the advertising information storing step; and generating advertisement transmission data so as to transmit the advertising data selected at the advertisement selection step to the client devices.

The advertising method according to still another aspect of this invention realizes transmission of advertising data from a server device to client devices. In this advertising method the server device performs the steps of detecting the communication speed between the server and each of the client devices; storing a plurality of advertising data that have mutually different data formats; and based upon the communication speed detected at the communication speed detection step, selecting advertising data having the corresponding data format, and generating advertisement transmission data for transmitting this advertising data to the client device.

The advertising method according to still another aspect of this invention realizes transmission of advertising data from a server device to client devices. In this advertising method the server device performs the steps of storing a plurality of advertising data that have mutually different data formats; selecting advertising data to be transmitted to the client devices from a plurality of advertising data stored at the advertising information storing step; and generating advertisement transmission data so as to transmit the advertising data selected at the advertisement selection step to the client devices. The transmission data generation step being allowed to add control information for controlling the output format of the advertising data in the client devices to the advertisement transmission data.

The present invention also relates to a computer-readable recording medium that stores a computer program which when executed on a computer realizes the advertising method according to the present invention. The computer-readable recording medium may be any one of the known portable physical media, such as floppy disk, magneto-optical disk, ROM, EPROM, EEPROM, CD-ROM and DVD, or fixed physical media installed in various computer systems, such as ROM, RAM and HD, or communication media for temporarily holding a computer program, such as a communication line and carrier waves, in the case of transmitting a computer program through a network, typically represented by the LAN, WAN and Internet. Moreover, "the computer program" refers to a data processing method written in any language and any de scription method, and is not limited by a specific format, such as source codes and binary codes. Moreover, "the computer program" is not limited by a singly constituted computer program, and includes those constituted in a dispersed manner as a plurality of modules and libraries, or those that achieve the function in corporation with a different computer program typically represented by an OS (Operating System).

Other objects and features of this invention will become apparent from the following description with reference to the accompanying drawings.

### BRIEF DESCRIPTION OF THE DRAWINGS

Fig. 1 is a block diagram of the entire advertising system in accordance with one embodiment of the present invention.
Fig. 2 is a block diagram of a server device shown in Fig. 1.
Fig. 3 is a block diagram of a client device shown in Fig. 1.
Fig. 4 shows one example of registered information to be stored in a registered information data base.
Fig. 5 shows one example of attribute information to be stored in an attribute information data base.
Fig. 6 shows one example of URL history information to be stored in a URL history information data base.
Fig. 7 shows one example of advertising information to be stored in an advertising information data base.
Fig. 8 explains the entire advertising process.
Fig. 9 is a flow chart of registration process.
Fig. 10 is a flow chart of log-on process.
Fig. 11 is a flow chart of communication speed detection process.
Fig. 12 is a flow chart of advertisement selection process.
Fig. 13 is a flow chart of advertisement transmission data generation and transmission process and advertisement transmission data request and reception process.
Fig. 14 is a flow chart of advertising data output process.
Fig. 15A shows the entire structure of the advertisement transmission data, Fig. 15B shows a protocol header, Fig. 15B shows a parameter, and Fig. 15B is a drawing that shows a structure of an advertising data packet.
Fig. 16 shows one example of inter-advertisement-related information to be stored in the advertising information data base.

### DESCRIPTION OF THE PREFERRED EMBODIMENTS

Preferred embodiments of an advertising system (hereinafter, referred to as the present system), an advertising method (hereinafter, referred to as the present method) and a recording medium (hereinafter, referred to as the present medium) that is read by a computer and has a computer program recorded therein, will be explained in detail below. The present invention is not intended to be limited by these embodiments.

### Outline of the present system:

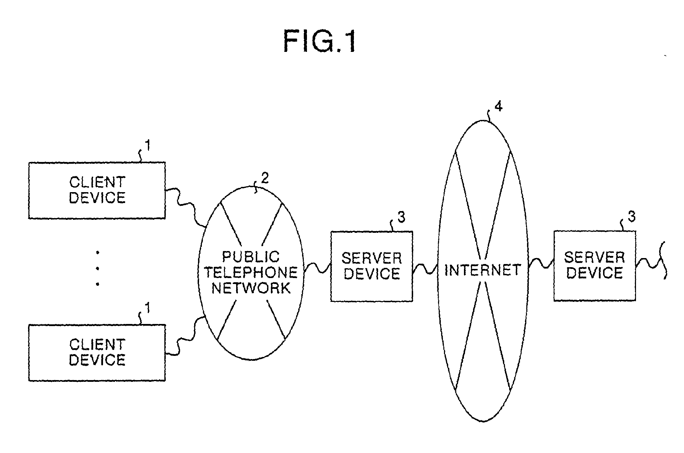

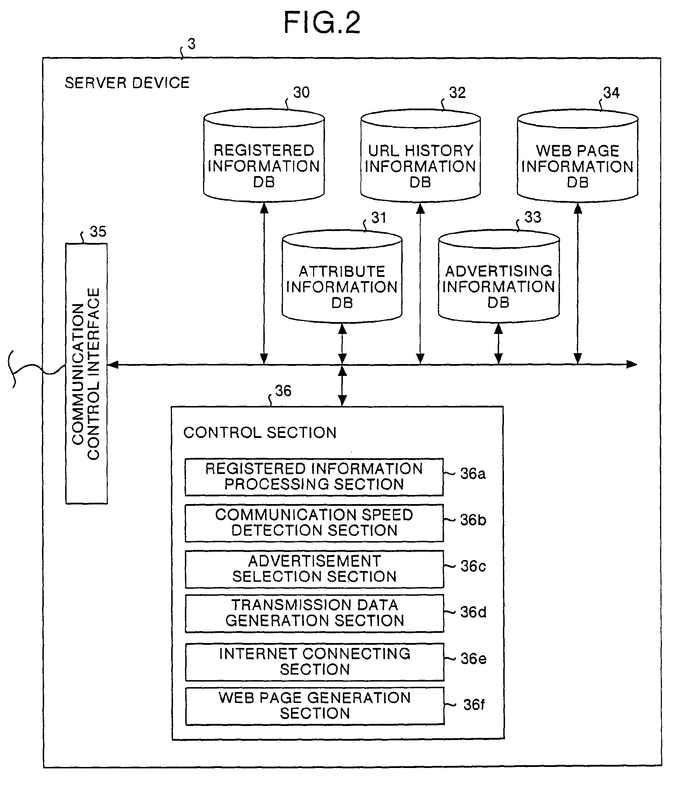

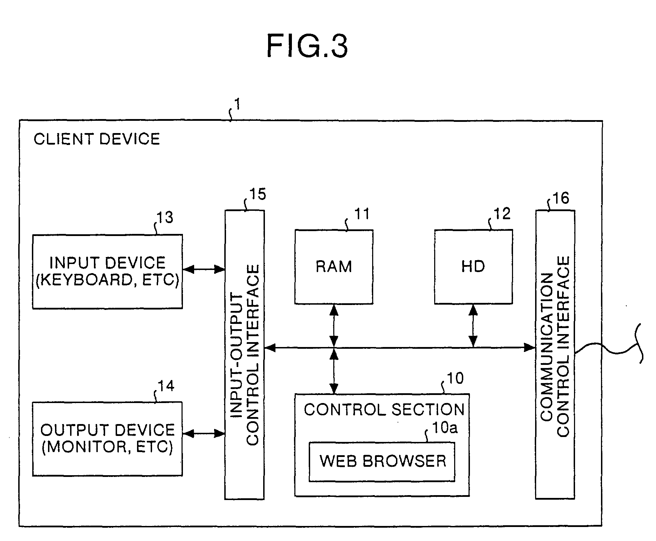

Fig. 1 shows a schematic structure of the entire advertising system in accordance with the present embodiment, Fig. 2 is a block diagram of a server device, and Fig. 3 is a block diagram of a client device.

As illustrated in Fig. 1, the present system is constituted by connecting a plurality of client devices 1 to the Internet 4 through a public telephone network 2, such as the ISDN and analog lines, and a server device 3 in succession. However, the respective client devices 1 may be connected to the Internet 4 through dedicated lines and a desired server device 3 other than the present system, and then connected to the server device 3 through the Internet 4.

Next, an explanation will be given of the outline of advertisements that are provided through the present system, and detailed explanations will then be given of the construction, processes and other aspects of the present system.

### Outline of advertisements:

In the present system, the server device 3 is provided as, for example, a server device 3 of an ISP to which users of the respective client devices 1 join. Here, the users of the respective client devices 1 are allowed to connect to the Internet 4 through the server device 3 so as to transmit and receive Web page data of the WWW and electronic mail data. In this case, the ISP includes not only providers that simply allow the users of the client devices 1 to connect to the Internet, but also any business that provides any services using the Internet 4, such as personal computer communication service and delivering services of various data, such as music and games, to the users of the client devices 1 that connect thereto in predetermined methods. Modes of advertising data:

In addition to such general data, the respective client devices 1 receive data containing advertising data from the server device 3 in predetermined timing, and output the advertising data in predetermined timing.

The advertising data has a plurality of modes, and the mode is determined in accordance with the communication speed between the server device 3 and the client devices 1.

One of these modes is a mode classified based upon the data formats. More specifically, the server device 3 provides image data and sound data for an advertisement, and both of the image data and the sound data, or only the sound data, is transmitted to each of the client devices 1, depending on the communication speed.

Moreover, the advertising data has another mode classified based upon transmission formats. More specifically, the advertising data is transmitted to each the client devices 1, in a non-compressed manner or in a compressed manner, depending on the communication speed. Such advertising data thus compressed is decompressed and outputted in the client device 1.

Furthermore, the advertising data has another mode classified based upon transmission units. More specifically, the advertising data is transmitted to each of the client devices 1 continuously without being divided, or in a divided manner into a plurality of transmission units (packets), depending on the communication speed. Such advertising data thus divided and transmitted is re-composed and outputted in the client device 1.

### System construction of server device:

Next, an explanation will be given of the construction of the present system for carrying out such advertisements.

First, an explanation will be given of the server device 3.

As illustrated in Fig. 2, the server device 3 is schematically constituted by a registered information DB (DB = data base) 30, an attribute information DB 31, a URL history information DB 32, an advertising information DB 33, a Web page information DB 34, a communication control IF (IF = interface) 35 and a control section 36, and these parts are connected to each other so as to communicate with each other through communication paths such as busses. Moreover, the server device 3 is connected to the Internet 4 in a manner so as to communicate through a communication device such as a router, not shown, and a dedicated line.

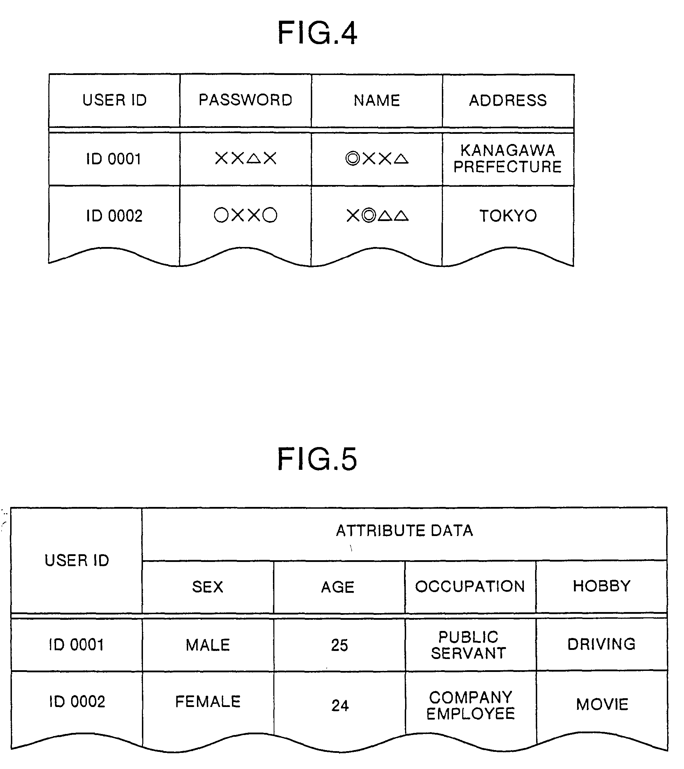

Among constituent elements of the server device 3, the registered information DB 30 is a registered information storage means for storing information (registered information) related to the respective users registered as members of the ISP that provides the present system. As shown in Fig. 4, for example, this registered information includes items, such as a user ID for readily identifying the user, a password for certifying the user, a name of the user and an address of the user, that are arranged in a correlated manner.

Moreover, the attribute information DB 31 is an attribute information storage means for storing information (attribute information) related to attributes of the respective users. As shown in Fig. 5, for example, the attribute information includes a user ID of the user and attribute data (here, sex, age, occupation and hobbies) of the user that are arranged in a correlated manner. In addition to these, the attribute data may include any information that forms a reference based on which advertisements suitable for the user are selected.

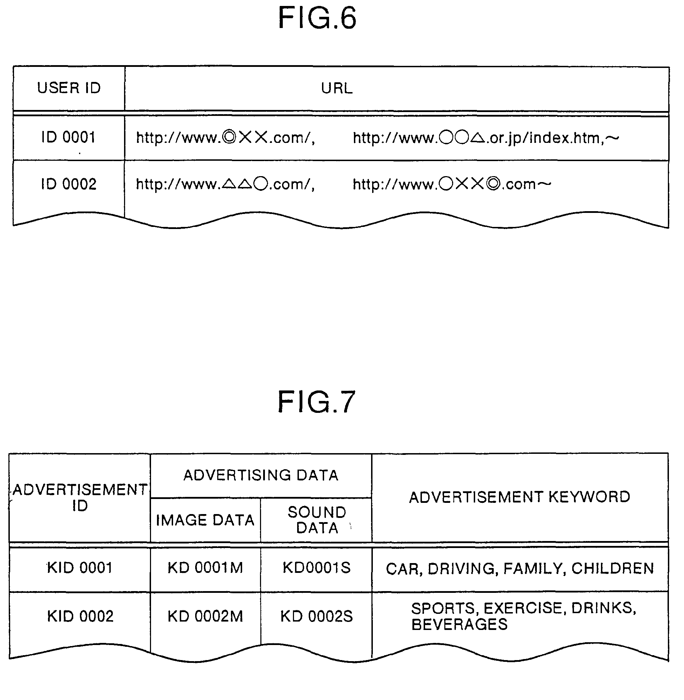

Furthermore, the URL history information DB 32 is a visiting history information storage means for storing information (URL history information) related to URLs (Uniform Resource Locator) of Web pages that have been visited by each of the client devices 1. As shown in Fig. 6, for example, the URL history information includes the user ID and URLs of Web pages that the user has requested for transmission through the server device 3 that are arranged in a correlated manner. Here, the URL history information is not necessarily held by the server 3, and, for example, the server device 3 may obtain this information by reading the contents of Cookie files stored in the client device 1. Here, these attribute information DB 31 and the URL history information DB 32 corresponds to the user information storage which stores information related to the user.

Moreover, the advertising information DB 33 corresponds to the advertising information storage which stores information (advertising information) related to advertisements to be transmitted to each of the client devices 1. As shown in Fig. 7, for example, the advertising information includes items, such as an advertising ID for readily identifying the advertising data to be transmitted to the client device 1, advertising data (or data ID and file name for specifying the advertising data) and an advertisement key word that is collated when the advertisement is selected, that are arranged in a correlated manner.

Here, the advertisement key word is a key word that is used when the advertisement is selected, and with respect to words typically indicating the contents and commodity fields of respective advertisements, for example, for advertisements for family cars, advertisement key words, such as "car", "drive", "family" and "children", which are predetermined by the managers, etc. of the present system, are stored. However, with respect to the index at the time of selecting an advertisement, in addition to such advertisement key words, any desired method may be used, in which category information indicating advertisement fields, etc., is used or advertising data storage positions are placed in a classified manner into respective advertising fields.

As described earlier, image data and sound data are prepared for one advertisement. For example, with respect to a specific car advertisement, image data including a driving scene of the car and CG (Computer Graphic) of characters in the car maker is stored in a predetermined image data format such as AVI. Moreover, sound data including sound messages for advertising the car, a theme song for the car, etc., is stored in a predetermined sound data format such as WAVE. In this manner, the advertising data, which has been constituted mainly by HTML (Hyper Text Markup Language) and XML (Extensible Markup Language) in the conventional advertising systems, is constituted by image data and sound data so that the advertisement output can be carried out with image quality and sound quality as good as those of television. Here, not limited to continuous image data, the image data may be formed by using stationary image data such as text data and HTML data.

Moreover, in Fig. 2, various Web page data to be transmitted to each of the client devices 1 are stored in the Web page information DB 34. With respect to the Web page data, for example, there is Web page data that forms a registration screen at the time of registering users to join the ISP constituting the present system. This Web page data is written in, for example, HTML, and stored. Here, the contents of data stored in the Web page information DB 34 are omitted from the Figures.

Furthermore, in Fig. 2, the communication control IF 35 of the server device 3 carries out communication controls between the server device 3 and the client devices 1 or between the server device 3 and the Internet 4 (or a communication device such as a router).

Next, an explanation will be given of the control section 36. The control section 36, which controls the respective sections of the server device 3, is constituted by a registered information processing section 36a, a communication speed detection section 36b, an advertisement selection section 36c, a transmission data generation section 36d, an Internet connecting section 36e and a Web page generation section 36f. Here, explanations will be briefly given of the functions of the respective sections, and detailed explanations of processes carried out in the respective sections will be given later.

Among these, the registered information processing section 36a carries out processes such as a registration process of users and a log-on process. Moreover, the communication speed detection section 36b is a communication speed detection unit for executing a communication speed detection process for detecting the communication speed between the server device 3 and each of the client devices 1. The advertisement selection section 36c corresponds advertisement selection unit for executing an advertisement selection process for selecting advertising data to be transmitted to the client device 1 from pieces of advertising data stored in the advertising information DB 33. Furthermore, the transmission data generation section 36d corresponds to the transmission data generation unit for executing advertisement transmission data generation and transmission process for generating and transmitting advertisement transmission data based upon the advertising data selected by the advertisement selection section 36c.

Moreover, the Internet connecting section 36e carries out various processes for connecting each of the client devices 1 to the Internet 4, in the same manner as a server device 3 of a general ISP. Furthermore, the Web page generation section 36f acquires Web page information from the Web page information DB 34, if necessary, and by adding necessary information to this Web page information, generates a Web page to be transmitted to the client device 1. The generation of the Web page is dynamically executed by using, for example, CGI (Common Gateway Interface).

The foregoing explanations have been given of the construction of the server device 3; however, the respective constituent elements in the Figures are conceptually illustrated based upon the functions, and not necessarily constructed physically as illustrated in the Figures.

For example, among the controlling functions of the server device 3, all or desired portions thereof may be realized by a CPU (Central Processing Unit) and a computer program that is interpreted and executed by the CPU, or these may be realized by hardware using wired logics.

Moreover, the specific state of the dispersion and combination in the server device 3 is not limited to the state shown in the Figures, and all or portions thereof may be constructed in a functionally or physically dispersed and combined manner with predetermined units in accordance with various loads, etc. For example, the registered information DB 30 and the attribute information DB 31 may be combined into one data base. Alternatively, the respective DBs of the server device 3 may be independently arranged as a data base server and intensively controlled. Here, with respect to the structural functions of an actual server device 3, functions of a firewall server and a DNS (Domain Name System) server may be added; however, these can be arranged in the same manner as the conventional systems, and the description thereof is omitted. System construction of client device:

Next, an explanation will be given of the client device 1.

As illustrated in Fig. 3, the client device 1 is schematically constituted by a control section 10, a RAM 11, a HD 12, an input device 13, an output device 14, an input-output control IF 15 and a communication control IF 16, and these parts are connected to each other through buses, etc., so as to data-communicate with each other. More specifically, the client device 1 can be provided as a personal computer, a home-use game machine, or an ISTV (Integrated Services TV), or a mobile communication terminal, such as a cellular phone and a PHS (Personal Handy Phone).

Among these, the control section 10, which controls the respective parts of the client device 1, is provided with a Web browser 10a. The Web browser 10a is a computer program which gives a request for data transmission to the server device 3 through the Internet 4, based upon an inputted URL, and interprets data transmitted from the server device 3 to allow the output device 14 to display the Web page.

Moreover, the Web browser 10a carries out predetermined controlling operations on the advertising data. More specifically, the Web browser 10a carries out the aforementioned registration process, log-on process and communication speed detection process in cooperation with the server device 3, and in addition to these, it carries out processes on request and receipt of advertisement transmission data from the server device 3 and processes on the output of advertising data.

Here, such controlling functions with respect to the advertising data may be installed as a plug-in on the Web browser 10a. In this case, the plug-in functions as a client to the Web browser 10a, and it is called by the Web browser 10a in a predetermined timing, and activated. The Web browser 10a and the plug-in of this type can be downloaded from, for example, the server device 3 through the Internet 4, or transferred from a medium such as a CD-ROM that has been delivered in a predetermined method, and then introduced into each of the client device 1.

With respect to the control section 10 which is arranged in this manner, all or desired portions thereof may be realized by a CPU and a computer program that is interpreted and executed by the CPU. In other words, the HD 12 is provided with a computer program that gives an instruction to the CPU in cooperation with the OS, and carries out various processes. This computer program is loaded by the RAM 11 so as to be executed, and allowed to form the control section 10 in cooperation with the CPU. However, this computer program may be stored in a predetermined server device connected to the client device 1 through a predetermined network, or all or some portions thereof may be downloaded, if necessary. Alternatively, all or desired portions of the control section 10 may be realized by hardware using wired logics, etc.

Moreover, in Fig. 3, devices, such as a key board, a mouse and a microphone, may be used as the input device 13. Amonitor, which will be described later, is also allowed to realize a pointing device function in cooperation with the mouse. Besides these, with respect to an input device 13, in the case when the client device 1 is realized as a home-use game machine, a controller used for the game machine may be used in place of the key board and the mouse.

Furthermore, with respect to the output device 14, in addition to the monitor (including a home-use television) , a speaker may be used (hereinafter, the output device 14 is referred to as monitor 14, if necessary) . These input devices 13 and the output devices 14 are connected to the control section 10, etc. through the input-output control IF 15.

The client device 1, arranged in this manner, is connected to the Internet 4 through the communication control IF 16, and is allowed to access the server device 3 in accordance with a predetermined communication protocol (for example, TCP/IP (transport control protocol/Internet protocol)).

### Advertising process:

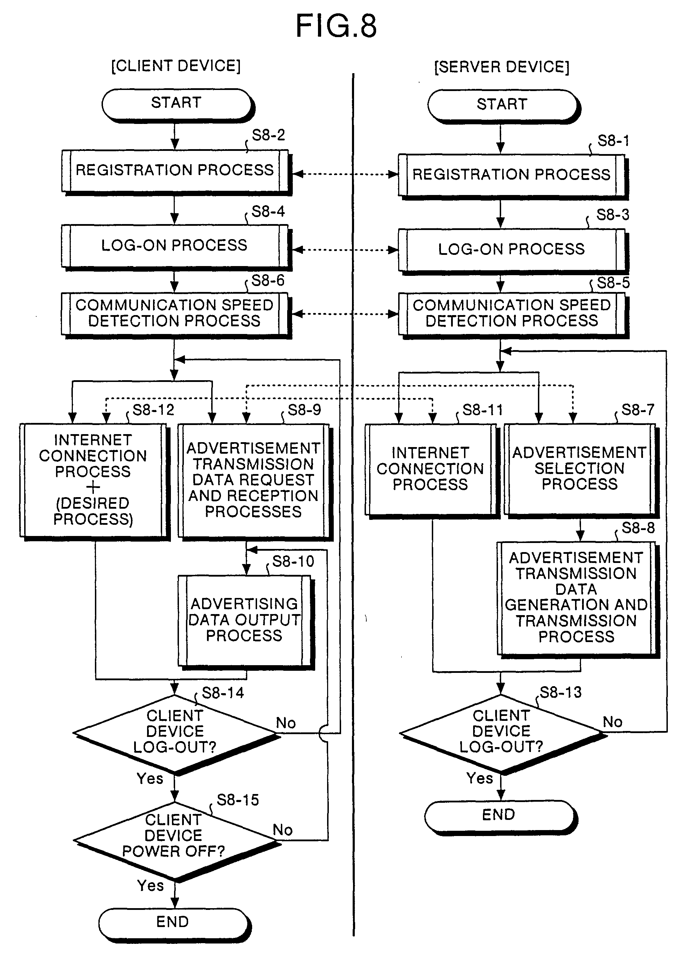

Next, an explanation will be given of an advertising process in the present system having the above-mentioned arrangement. Fig. 8 shows a flow chart that represents the entire advertising processes . As shown in this Figure, the advertising processes are mainly classified into a registration process (steps S8-1, S8-2), a log-on process (steps S8-3, S8-4), a communication speed detection process (steps S8-5, S8-6), an advertisement selection process (step S8-7), advertisement transmission data generation and transmission process (step S8-8), advertisement transmission data request and receptionprocess (step S8-9), an advertising data output process (step S8-10) and an Internet connecting process (steps S8-11, S8-12).

Among these, the registration process is a process for allowing users to register for the present system, and the log-on process is a process for allowing the registered users to log on the present system. Moreover, the communication speed detection process is a process for detecting the communication speed between the server device 3 and the client device 1.

Here, upon completion of the communication speed detection process, basically, the Internet connecting process is carried out. In the Internet connecting process, the server device 3 functions as a general ISP server device 3 to connect the client device 1 to the Internet 4. Then, based upon a request from the client device 1, desired data is acquired by the server device 3 through the Internet 4, and the resulting data is transmitted to the client device 1. Moreover, in the client device 1, besides these processes, desired processes independent of the server device 3 (for example, executions of various pieces of application software) are carried out.

Moreover, in parallel with the above-mentioned Internet connecting process, the advertisement selection process and the advertisement transmission data generation and transmission process are carried out in predetermined timing in the server device 3, and in the client device 1, the advertisement transmission data request and reception process and the advertising data output process are carried out. Among these, in the server device 3, the advertisement selection process is a process for selecting an advertisement to be transmitted to the client device 1, and the advertisement transmission data generation and transmission process are processes for generating advertisement transmission data to be transmitted to the client device 1, and for transmitting the resulting data. Furthermore, the advertisement transmission data request and reception process are processes for requesting transmission of advertisement transmission data to the server device 3, and for receiving the transmitted advertisement transmission data, and the advertisement data outputting process is a process for outputting the advertising data in a predetermined format.

Thereafter, in parallel with the Internet connecting process, the server device 3 repeatedly carries out the advertisement selection process, the Internet connecting process and the advertisement transmission data generation and transmission process until the client device 1 has logged out from the present system (step S8-13). Moreover, until it has logged out (step S8-14), the client device 1 repeatedly carries out the Internet connecting process, the advertisement transmission data request and reception process and advertising data output process. In particular, the advertising data output process is repeatedly carried out even after the log out, until the client device 1 has been turned off (cut off in power) (step S8-15).

The following description will discuss specific contents of the respective processes.

### Registering process:

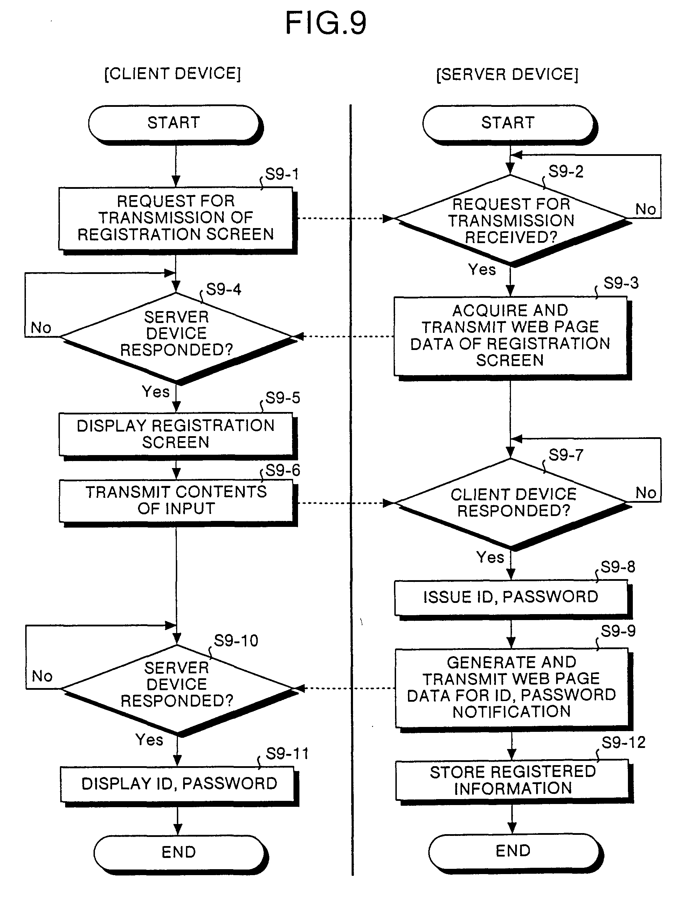

First, an explanation will be given of the registration process. Fig. 9 is a flow chart that shows a sequence of the registration process. In this process, the user first requests the server device 3 for a registration screen (step S9-1). More specifically, the client device 1 is allowed to connect to the server device 3 by a dial up connection, etc., through the Web browser 10a, and a predetermined URL corresponding to the registration screen of the present system is then inputted. Then, the request for transmission of the registration screen to the server device 3 is carried out.

In the server device 3, the presence of the request for transmission from a client device 1 has been monitored (step S9-2), and upon receipt of the request for transmission, the contents of the request for transmission are analyzed by the control section 36, and in accordance with the results thereof, the process is transferred to the respective sections within the control section 36 (since this point is carried out in the same manner in the following processes, the description thereof is omitted).

In the case when the contents of the transmission show a request for transmission of the registration screen, the registration process for the user is carried out under control of the registering information processing section 36a. In the registration process, first, Web page data used for displaying the registration screen is obtained from the Web page information DB 34, and this Web page data is transmitted to the client device 1 through the communication control IF 35 (step S9-3). Here, the identification of the client device 1 at the time of transmitting data from the server device 3 to the client device 1 can be made by using IP address transmitted from the client device 1 to the server device 3 together with the request for transmission (hereinafter, upon data transmission from the server device 3 to the client device 1, since the client device 1 is identified by the same method, the description thereof is omitted).

In the client device 1, the Web page data from the server device 3 is received through the communication IF and the transmitting and receiving section, and interpreted by the Web browser 10a so that the registration screen is displayed on the monitor 14 (steps S9-4, S9-5, hereinafter, the receiving and displaying processes of the Web page are carried out by the same method; therefore, the description thereof is omitted). The registration screen is a screen for allowing the user to input his or her own information, and for example, includes a plurality of input blanks to which the name and address are inputted and a transmission button used for instructing the transmission.

Then, the user inputs necessary information to the input blanks on the registration screen, and selects the transmission button; thus, the inputted information is transmitted to the server device 3 (step S9-6). When the information has been inputted in this manner, the registered information processing section 36a issues a user ID and a password in a predetermined method (for example, random generation) (steps S9-7, S9-8), and generates data for a Web screen for notifying these ID and password, and transmits these to the client device 1 (step S9-9).

The generation of these data may be carried out automatically by using, for example, CGI. Thus, the user is allowed to receive his or her own ID and password (step S9-10, S9-11). Moreover, the server device 3 stores the ID and password thus issued and the previously transmitted information from the client device 1 in the registered information DB 30 in a mutually correlated manner (step S9-12).

Thus, the registration process is completed.

### Log-on process:

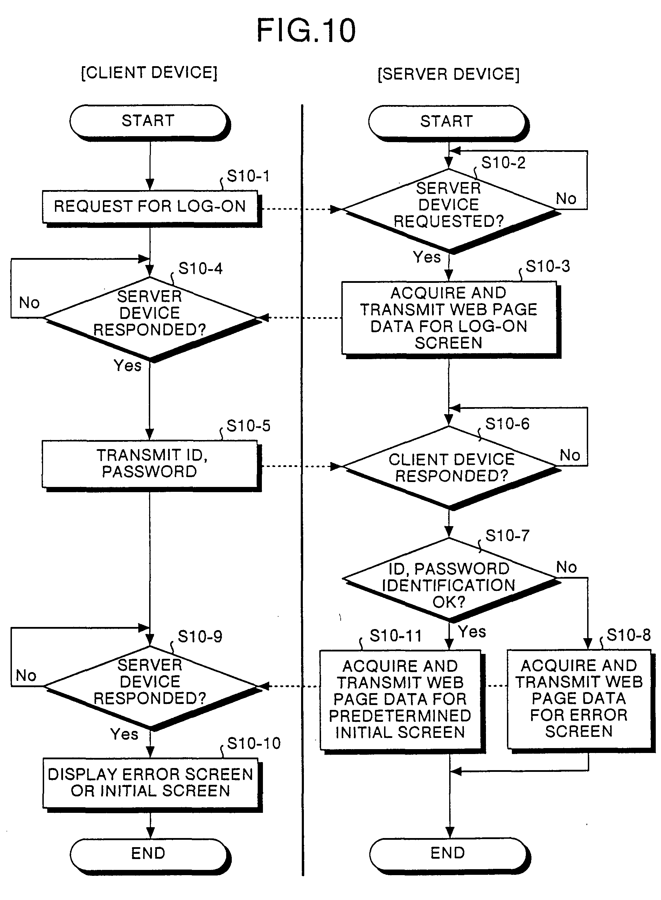

Next, an explanation will be given on the log-on process . Fig. 10 is a flow chart that shows a sequence of the log-on process. In this process, the user carries out a dial-up connection, and then inputs a predetermined URL in the Web browser 10a so as to give a log-on request to the present system (step S10-1). Upon receipt of this request, the server device 3 carries out the log-on process under control of the registered information processing section 36a. In this process, first, Web page data for displaying a log-on screen is acquired from the Web page information DB34, and transmitted to the client device 1 (steps S10-2, S10-3), and the log-on screen is displayed on the monitor 14 (step S10-4). The log-on screen is provided with at least input blanks for the user ID and password.

When the user inputs the user ID and password and these are transmitted (step S10-5), the user is certified by using the user ID and password (steps S10-6, S10-7). In other words, it is confirmed whether or not these ID and password are coincident with the ID and password stored in the registered information DB 30. Then, if not coincident, a judgment is made as a certification error, and Web page data for an error screen is acquired from the Web page information DB 34, and this is transmitted to the client device 1 (step S10-8) so that the error screen is displayed on the monitor 14 (steps S10-9, S10-10). In contrast, if they are coincident with each other, the log-on is permitted so that Web page data for a predetermined initial screen is acquired from the Web page information DB 34, and this is transmitted to the client device 1 (step S10-11); thus, the initial screen is displayed on the monitor 14 (steps S10-9, S10-10).

Thus, the log-on process is completed.

### Communication rate detection process:

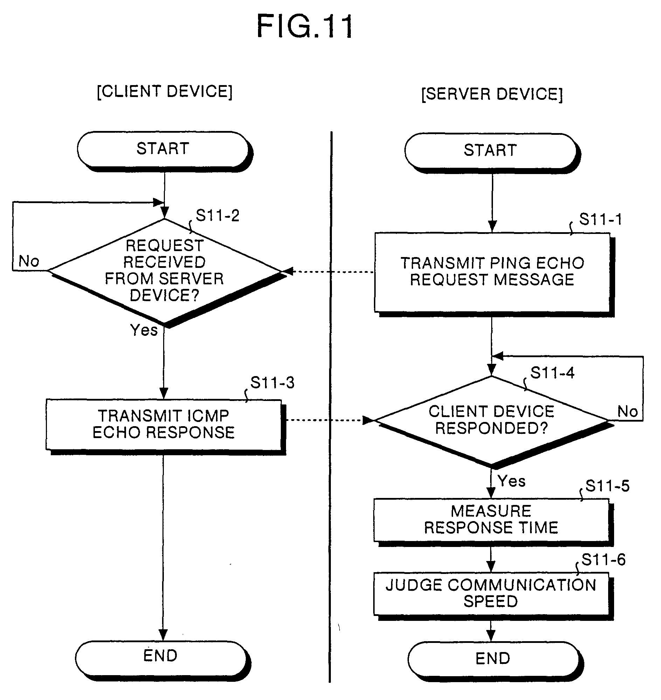

Next, an explanation will be given of the communication speed detection process. Fig. 11 is a flow chart showing a sequence of the communication speed detection process. In this process, the communication speed between the server device 3 and the client device 1 is detected by using the Ping (Packet Internet Groper) in conformity with the IP (Internet Protocol) under control of the communication speed detection section 36b in the server device 3. More specifically, first, a Ping echo request message (Ping message) is transmitted from the server device 3 to the client device 1 (step S11-1).

Upon receipt of this Ping message, the client device 1 immediately returns an ICMP (Internet Control Message Protocol) echo response (ICMP response) to the server device 3 (step S11-2, S11-3). Here, the server device 3 is measuring the response time from the transmission of the Ping message to the receipt of the ICMP response (step S11-4, S11-5), and based upon this time, the communication speed between the server device 3 and the client device 1 (more specifically, bandwidth) is determined (step S11-6, the contents of use of the communication speed will be described later).

Thus, the communication speed detection process is completed.

### Internet connection process:

After the communication speed detection process has been completed, the Internet connecting process is carried out under control of the Internet connecting section 36e as described above . Here, since this process is a well-known process, the description thereof is omitted. In this case, the URL of the Web page on which the transmission request is carried out from the client device 1 to the server device 3 in this Internet connecting process is successively stored in the URL history information DB 32.

### Advertisement selection process:

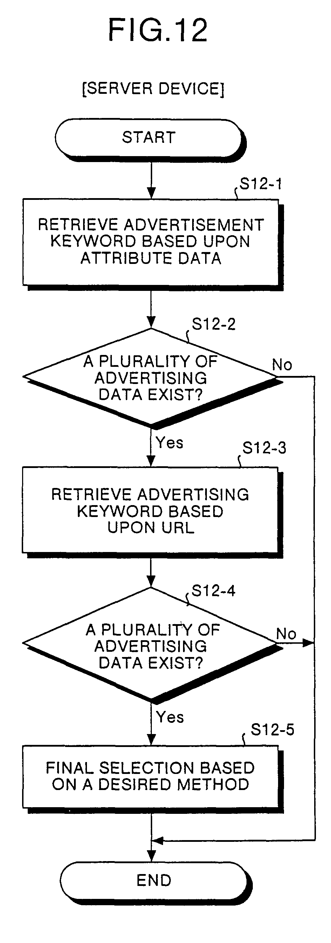

Next, an explanation will be given of the advertisement selection process. Fig. 12 is a flow chart that shows a sequence of the advertisement selection process. In this process, based upon attribute data stored in the attribute information DB 31 and the URLs stored in the URL history information DB 32, one piece of advertising data to be transmitted to the client device 1 is determined.

Here, first, based upon the attribute information, the contents of advertisement are limited to a certain degree . More specifically, attribute data (sex, age, occupation and hobbies) of the user (who is logging on) to which the advertisement is transmitted is called from the attribute information DB 31. Then, based upon the attribute data, advertisement key words stored in the advertisement information DB 33 are retrieved, and only those advertisements having advertisement key words coinciding with the attribute data are selected as advertisement candidates (step S12-1). For example, in the case when hobby "drive" is stored in the attribute data, the advertisements of cars containing the advertising key word "drive" form the candidates of the advertisement. If there is only one candidate of the advertisement thus selected (step S12-2), the advertisement selection process is completed at this point. In this manner, by selecting the advertisement based upon the attributes of the user, it is possible to select advertisements that are coincident with the hobbies and tastes of the user.

In contrast, if there are a plurality of candidates of the advertisement selected as a result of the retrieval based upon the attribute data, the selection is further continued with respect to these candidates of the advertisement based upon the URL history information (step S12-3). More specifically, a plurality of URLs that have been inputted by the user before are called from the URL history information DB 32. Then, a plurality of Web pages, specified by these URLs, are called through the Internet 4, and these Web pages are subjected to matching processes with each other so as to retrieve character strings that have high frequencies of appearance among the character strings contained in the URLs (the reference level of frequencies of appearance is preliminarily determined so as to select a proper number of character strings).

Then, based upon the character strings thus retrieved, the advertisement key words of the above-mentioned candidates of the advertisement are retrieved, and only the advertisements having the advertisement key words coinciding with the character strings are finally determined as advertisements that are to be transmitted. At this point, if only one candidate is left as a result of the selection for the advertisement (step S12-4), the advertisement selection process is then completed. In this manner, by selecting advertisements coinciding with the URLs that have been inputted by the user, it becomes possible to select only the advertisements that the user would be interested in. Here, in the case when the acquisition of Web pages and the retrieval of character strings are successively carried out based upon URLs, this is not preferable in some cases since a great load is imposed on the server device 3. Therefore, the retrieval of the advertisement key words may be carried out with respect to only the URLs that have comparatively high frequencies of input or based upon character strings contained in the Web page of the URLs that has been lastly inputted.

At the time when the retrieval based upon the URLs has been completed, if there are still some advertisements left as candidates, one advertisement is selected from them by a predetermined method (step S12-5), thereby completing the advertisement selection process. For example, the advertisement having the smallest advertisement ID may simply be selected, or the order of preference may be preliminarily set among respective advertisements based upon the advertising fee, etc., and the advertisement having the highest order of preference may be selected.

Here, the above-mentioned description has dealt with a case in which only one advertisement is selected; however, a predetermined number of advertisements may be selected, and in this case, the order of transmission of a plurality of advertisements finally selected may be desirably determined, for example, based upon the above-mentioned order of preference.

### Advertisement transmission data generation and transmission processes, advertisement transmission data request and reception process:

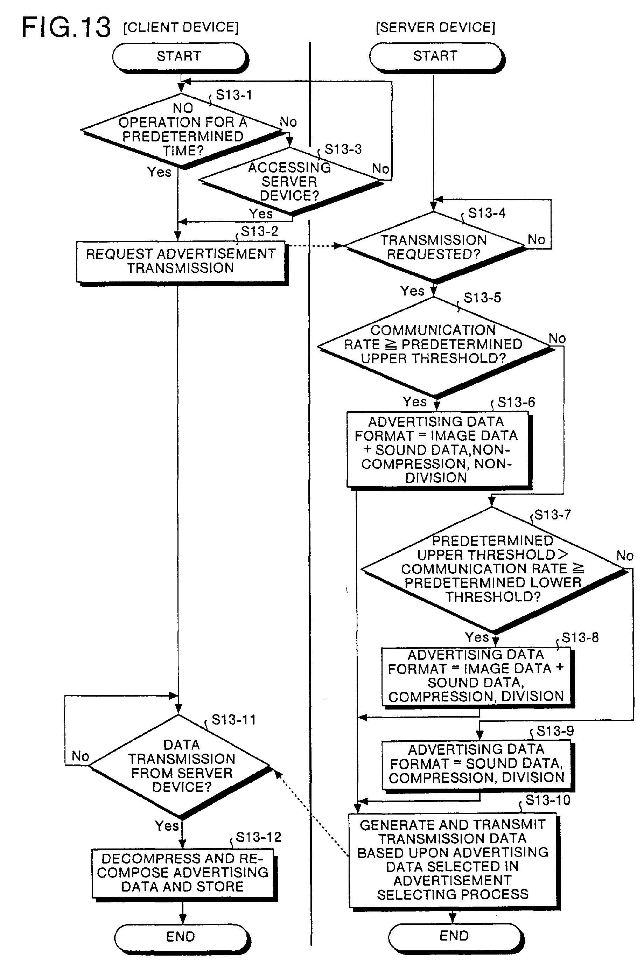

Next, explanations will be given of the advertisement transmission data generation and transmission process in the server device 3 and advertisement transmission data request and reception process in the client device 1. Fig. 13 is a flow chart that shows the advertisement transmission data generation and transmission process and advertisement transmission data request and reception process.

In these processes, first, the Web browser 10a of the client device 1 monitors the receiving timing of the advertisement transmission data. More specifically, first, a monitoring process is executed as to whether or not any input is made by the user with respect to the input device 13 of the client device 1 (step S13-1). Then, in the case when no input has been given continuously for not less than a predetermined time, since it is judged that there is any space time for processing in the client device 1 so that a request for transmission of advertising data is given to the server device 3 (step S13-2).

In contrast, in the case when any input exists, the monitoring process is further executed as to whether or not the server device 3 is being accessed (any data is being transmitted or received through the server device 3)(step S13-3). In the case when any access is being made, since it is judged that any advertisement transmission data can be received together with other desired data, a request for transmission of advertising data is given to the server device 3 also in this case (step S13-2). In other cases except for these cases, since it is judged that there is no chance to receive the transmission of advertisement transmission data, the above-mentioned monitoring process is continued without the request for the advertisement transmission data.

In this state, upon receipt of the request for advertisement transmission data (step S13-4), the advertisement transmission data generation and transmission process are started under control of the transmission data generation section 36d of the server device 3. In this process, first, based upon the communication speed detected by the previous communication speed detection process, the transmission format of the advertisement transmission data is determined. More specifically, in the case when the transmission rate is higher than a predetermined upper reference rate, since it is judged that a sufficient communication speed is obtained, a decision is made so that both of the image data and sound data should be transmitted without compression in a non-divided manner (steps S13-5, S13-6). Moreover, in the case when the transmission rate is lower than the predetermined upper reference rate, but higher than a predetermined lower reference rate (< upper reference rate), a decision is made so that both of the image data and sound data should be transmitted with compression in a divided format (steps S13-7, S13-8). In other cases except for these cases, that is, in the case when the communication speed is lower than the lower reference rate, a decision is made so that only the sound data should be transmitted with compression in a divided format (step S13-9).

Thereafter, the transmission data generation section 36d generates advertisement transmission data based upon the format thus determined (step S13-10). For this purpose, the advertising data corresponding to the advertisement selected by the previous advertisement selection process is called from the advertising information DB 33. Then, division and compression processes are carried out on this advertising data, if necessary. In this case, the division is carried out by using a predetermined method, and for example, the data length of the advertisement transmission data after the division is set to not more than a predetermined length. Moreover, in the compression process, a predetermined compression system is used; and for example, in the image data compression, MPEG may be used, and in the sound data compression, MP3 may be used.

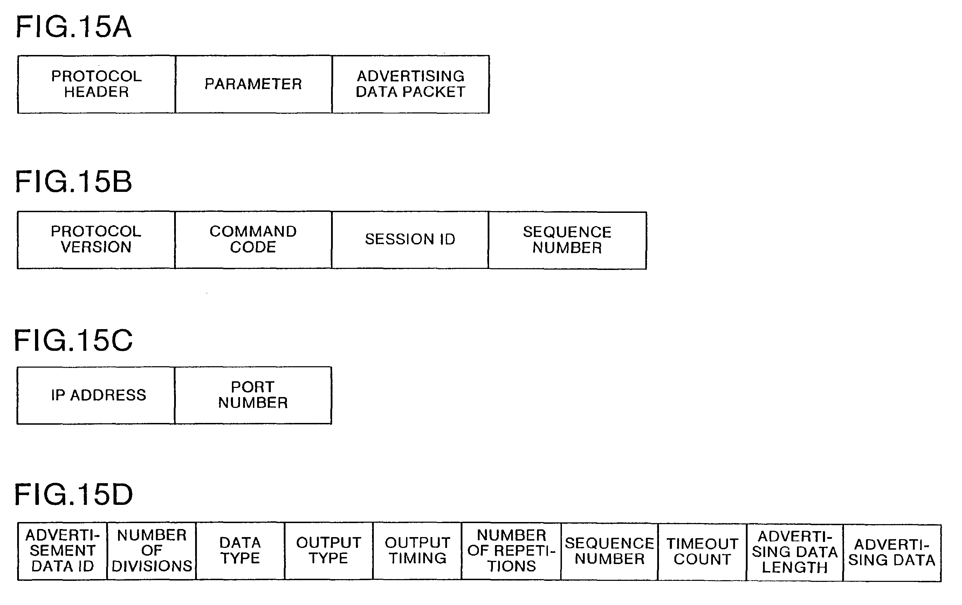

By using the advertising data that have been compressed and divided as described above, advertisement transmission data is generated in a format in conformity with a predetermined protocol. An explanation will be given of a structural format of the advertisement transmission data using the protocol. Fig. 15A to Fig. 15D show the structural format of the advertisement transmission data. As illustrated in Fig. 15A, the advertisement transmission data is constituted by a protocol header, a parameter, and a packet having advertising data packets successively aligned.

Among these, as illustrated in Fig. 15B, the protocol header is constituted by a protocol version for indicating the version of a protocol, a command code, a session ID for readily identifying the session and a sequence number used for carrying out a transmission and receipt confirmation by a sequence control, all of which are successively aligned.

Among these, with respect to the protocol version, a preliminarily fixed number for the version of the corresponding protocol is used. Moreover, with respect to the command code, a predetermined control command is used, and, for example, with respect to the advertisement transmission data, a command code such as "CM" indicating the transmission of advertising data is used. Furthermore, with respect to the session ID, a number that is assigned by the server device 3 at the time when the corresponding session is started is used. Here, the sequence number is incremented by one each time a piece of advertisement transmission data is transmitted.

Moreover, as illustrated in Fig. 15C, the parameter is provided with at least two arguments.

One of these arguments is an IP address of the client device 1 that is a destination of the transmission, and a routing process to the client device 1 is carried out by using this address.

The other argument is a port number to which the advertising data is transmitted, and the adverting data is passed to the Web browser 10a of the client device 1 by using this number.

Furthermore, as illustrated in Fig. 15D, the advertising data packet is constituted by an advertisement ID, the number of divisions, data type, output type, output timing, the number of repetitions, sequence number, timeout count, the length of advertising data and advertising data, all of which are successively aligned.

Among these, the number of divisions indicates the number of divisions at the time of dividing and transmitting one piece of advertising data. For example, in the case when a decision is made in the advertisement transmission data generating process so that the transmission is made in a non-divided manner, the number of divisions is "0", and in the case when the decision is made so that the transmission is made in a divided manner, the number of divisions is set to a value that corresponds to the number of divisions that are executed by the aforementioned predetermined method. Based upon the number of divisions, the re-generation of the divided advertisement transmission data is carried out in the client device 1 based upon the number of divisions without causing any problems.

Moreover, the data type indicates the type of the advertisement transmission data as to non-compressed and compressed, and the type of compression system in the case when the data is compressed. For example, in the case when a decision is made in the advertisement transmission data generating process so that the transmission is made without compression, the data type is set to predetermined data indicating the non-compressed, and in the case when a decision is made so as to transmit with compression, the data type is set to data such as "MPEG" or "MP3". Based upon the data type, the client device 1 is allowed to decompress the compressed advertisement transmission data.

Furthermore, the output type is data indicating whether the advertising data is image data or sound data, or whether or not both of the data is transmitted. Based upon the output type, the client device 1 is allowed to appropriately reproduce the advertising data as image data or sound data.

Moreover, the output timing indicates the timing in which the advertisement transmission data is outputted in the client device 1. For example, when the advertisement transmission data is to be outputted at 12:00, the output timing is set to, for example, "1200". In the client device 1, the output timing is collated with time information held inside thereof so that the advertising data is outputted in appropriate timing. In this case, the output timing is set as the time; however, the output timing may be specified as desired states of expression using a relative time display, etc., such as "10 minutes after the receipt of advertisement transmission data from the server device" or "20 minutes after the power turning-on of the client device 1". Furthermore, the information that forms a reference of the timing judgment is not limited to the time information held by the client device 1; and a desired reference may be obtained in accordance with the state of the output timing.

Here, the number of repetitions indicates the number of output repetitions of the advertisement transmission data in the client device 1. For example, the advertisement transmission data needs to be outputted with three repetitions, the number of repetitions is set to, for example, "3". Based upon the number of repetitions, the client device 1 determines the number of output repetitions of the advertising data.

The sequence number is a sequential number used for confirming the transmission of the advertisement transmission data, and this number is incremented by one each time a piece of the advertisement transmission data is transmitted.

Moreover, the timeout count is a number indicating the effective period of the advertisement transmission data, and this number is decremented by one each time the data is checked by the client device 1 as to whether or not it is outputted, and the data is discarded when the number becomes zero.

The length of advertising data represents the total length of the advertising data.

In Fig. 13, after the transmission data generation section 36d has generated advertisement transmission data as described above, it transmits the resulting advertisement transmission data to the client device 1 through the communication control IF 35.

Thus, the generating process of the advertisement transmission data is completed.

When the advertisement transmission data is transmitted in this manner, the Web browser 10a detects that the advertisement transmission data in question is a piece of advertisement transmission data for advertising data by analyzing the command code of the protocol header (step S13-11). Then, the data type of the advertising data packet is analyzed so that, when the advertising data is compressed, this is decompressed.

Moreover, the Web browser 10a analyzes the number of divisions of the advertising data packet, and in the case when the number of divisions is any number other than "0", the advertising data is re-composed. In other words, advertising data packets having sequential numbers, which are advertising data packets having the same advertising data ID, are received by the number corresponding to the number of divisions, and these are linked to each other. Here, in the case when the sequential number becomes discontinued due to a transmission error, etc., the corresponding advertisement transmission data is re-transmitted from the server 3 by a known sequence control using IP.

The advertising data, thus decompressed and re-composed, is stored in the RAM 11 or HD 12 of the client device 1 together with other data contained in the advertising data packet (step S13-12).

Thus, the advertisement transmission data request and reception process are completed.

### Advertising data output process:

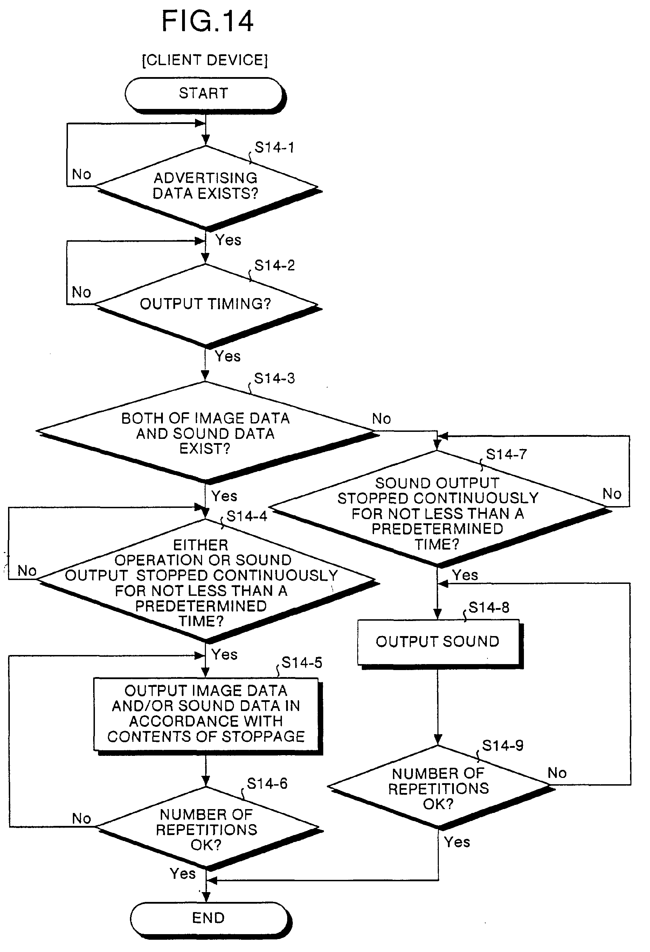

Lastly, an explanation will be given of the advertising data output process. Fig. 14 is a flow chart showing a sequence of the advertising data output process. In this process, it is judged whether or not any advertising data is stored at a predetermined position in the RAM 11 or the HD 12 of the client device 1 (step S14-1). If any advertising data is stored; then the output timing of the advertising data packet is called, and the output timing is collated with the time information held inside thereof so that a judgment is made as to whether or not the output timing of the advertising data has arrived (step S14-2).

If the output timing has arrived; then a judgment is made as to whether the advertising data contains both image data and sound data or only sound data (step S14-3), and in the case when both of the data have been stored, monitoring processes are carried out as to whether or not either of the operation of the input device 13 and the operation of the sound output has been continuously stopped for not less than a predetermined time (step S14-4). In the case when both of them have been stopped, both of the image data and the sound data are outputted; in the case when only the input device 13 has been stopped, only the image data is outputted; and in the case when only the sound output has been stopped, only the sound data is outputted (step S14-5). The outputting process is repeated as many as the number of repetitions of the advertising data packet (step S14-6).

Here, the output of the image data may be displayed on the entire surface of the screen of the monitor 14, or may be displayed on only one portion thereof. Moreover, the sound data may be outputted in a desired volume level. These controlling operations on the output area of the image data and the volume level of the sound data may be carried out by, for example, adding predetermined control codes to the advertisement transmission data and allowing the Web browser 10a to read these control codes.

Moreover, at step S14-3, in the case when the judgment shows that only the sound data is stored, a monitoring process is executed as to whether or not the sound output has been continuously stopped for not less than a predetermined time (step S14-7), and if it has been stopped; then only the sound data is outputted (step S14-8). In this case also, the output of the sound data is repeated as many as the number of the repetitions of the advertising data packet (step S14-9).

In this manner, after the advertising data has been outputted as many as the number of repetitions of the advertising data, the advertising data output process is completed.

Thereafter, as illustrated in Fig. 8, until the client device 1 has logged out the present system, the advertisement selection process and the advertising data output process are repeated in parallel with the Internet connecting process . In this case, there are successive changes in the URLs that have been requested through the Internet connecting process; therefore, the advertisement selected by the advertisement selection process is also changed. In this manner, a new advertisement is selected, and when advertisement transmission data containing advertising data of such an advertisement is received by the client device 1, the previous advertising data is updated by the new advertising data so that the newest advertising data is always outputted.

Here, in addition to the timing shown in the flow chart of Fig. 8, the advertising data output process may be carried out in desired timing. For example, immediately after the power turning-on of the client device 1, or during the dial-up connection to the server device 3, the advertising data output process may be carried out. At this time, in the case when the advertising data in question previously obtained upon logging on the present system is stored in the client device 1, this advertising data may be immediately outputted.

The foregoing descriptions have discussed one embodiment of the present invention; however, besides the aforementioned embodiment, the present invention may be realized by different embodiments within the scope of the technical idea described in the aforementioned claims.

For example, in the above-mentioned embodiment, the explanation has exemplified a case in which advertisement transmission data is transmitted from the ISP server device 3 to the client devices 1. However, not limited to the ISP servers, the present invention may also be applied to cases in which any broadcasting business or any advertisement provider tries to provide advertisements through a desired medium. For example, any broadcasting business including a television station and a radio broadcasting station or any advertisement provider may transmit advertisement transmission data in the same manner by using any of networks including the Internet, LAN, etc., ground wave, CATV, CS, BS or ISDB (Integrated Services Digital Broadcasting) . In this case, the server device 3 may be installed inside the broadcasting station, etc., and arranged as a broadcasting device that can carry out the above-mentioned generation of the advertising transmission data, etc.

Moreover, based upon the communication speed detected by the communication speed detection section 36b, the advertising data is selected. However, this system may be applied to another controlling system. For example, the server devices 3 are placed in a plurality of positions having mutually different communication environments in the Internet 4, and based upon the detected communication speed, one of the server devices 3 that allows the client device 1 to achieve the highest communication speed may be selected, and this server device 3 may be connected to the corresponding client device 1.

Furthermore, based upon the communication speed detected by the communication speed detection section 36b, selection is made between image data and voice data, between non-compressed and compressed, or between non-divided and divided. Besides these, selection may be made between long time and short time. More specifically, with respect to one advertising data, two types of advertising data, that is, advertising data aiming at a long-time output (for example, 2 to 3 minutes) and advertising data aiming at a short-time output (for example, 10 to 30 seconds), may be provided and stored in the advertising information DB 33, and in the case of a high communication speed, only the long-time advertising data having a great amount of data maybe transmitted, while, in the case of a low communication speed, only the short-time advertising data having a small amount of data may be transmitted. Thus, for example, in the case of good communication environments, a full-scale, vivid advertisement can be outputted, and even in the case of poor communication environments, a short version of the advertisement, which causes less communication load, can be outputted.

Moreover, in the advertisement selection process, matching processes are simply carried out between the attributes and URL of the user and the advertising key words; however, another advertisement having a predetermined relationship with the contents that the user is interested in may be outputted. For example, when the user is interested in beverages of A company, the server device 3 may select an advertisement of B company that is a business rival of A company, and allows the client device 1 to output the advertisement.

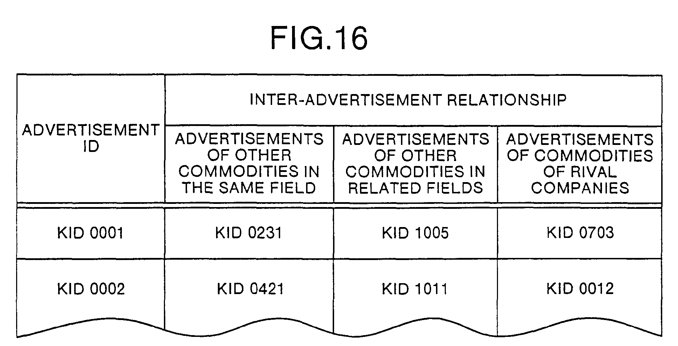

In order to construct such a system, first, information (inter-advertisement-related information), which indicates relationships between respective advertisements (or the advertisers of the advertisements), is preliminarily installed in the advertising information DB 33. Fig. 16 shows one example of such inter-advertisement-related information. In Fig. 16, with respect to the advertisement IDs of respective advertisements and the corresponding advertisements, advertisement IDs of advertisements that have respective inter-advertisement relationships, such as "advertisements of other commodities in the same field", "advertisements of other commodities in related fields" and "advertisements of commodities of rival companies", are stored. Then, in the advertisement selection process by the advertisement selection processing section, after the corresponding advertisement has been selected in accordance with the flow chart shown in Fig. 12, another advertisement is selected based upon the advertisement and one inter-advertisement relationship that is desirably selected (for example, the above-mentioned "advertisements of commodities of rival companies"), while referring to the inter-advertisement-related information.

Moreover, explanation has been given of a case in which the client device 1 requests the server device 3 for the transmission of advertising data. However, the advertising data may be transmitted actively from the server device 3 by using a so-called push technique, etc., or the transmission timing may be judged by both of the client device 1 and the server device 3.

Furthermore, explanation has been given of a case in which the advertising data is transmitted from the server device 3 to the client device 1. However, the advertising data may be supplied to the client device 1 by using another desired method. For example, the client device 1 may be allowed to read an FD (Floppy Disk) or a CD-ROM containing the advertising data so as to obtain the advertising data. In this case also, by adding various data to the advertising data as advertising data packets, it is possible to carry out controls, such as output timing and the number of repetitions.

In addition to this, in the same manner as the advertising data, another data related to the advertisement may be transmitted to the client device 1. For example, data related to a virtual agent that is displayed on the monitor 14 of the client device 1 as animations may be transmitted so that guiding, etc., for the advertisement displayed on the monitor 14 may be performed by the agent. In order to construct such a system, first, tracking data constituting the animations of the agent and the application for executing the tracking data are preliminarily stored in the client device 1. Moreover, parameter data for specifying the contents of the operation of the tracking data is stored in the advertising information DB 33 for each of the advertisements . Then, each time the advertising data is transmitted to the client device 1, the parameter data corresponding to the advertisement is called from the advertising information DB 33, and this is transmitted to the client device 1 together with the advertising data. Thus, the guidance, etc., for the advertisement can be performed by operating the tracking data using the transmitted parameter data.

As described above, according to this invention, advertising data corresponding to the user information is selected, and outputted to the client device. Therefore, it is possible to supply advertisements that related to the user. In other words, it becomes possible to draw more attention of the user to the advertisement as compared with a conventional system, and consequently to improve the advertising effects and publicity.

Moreover, the advertisement is selected in accordance with the attributes of each of the users so that advertisements having the contents suitable for the tastes and interests of the user are supplied. Thus, it is possible to improve the advertising effects and publicity.

Moreover, the advertisement is selected in accordance with information indicating the visiting history of the user so that advertisements having the contents suitable for the individual attributes of the user, such as tastes and interests of the user, are supplied. Thus, it is possible to improve the advertising effects and publicity.

Moreover, the advertisement may be selected based upon the inter-advertisement-related information which indicates the correlation between a plurality of advertising data. Therefore, the user is allowed to view advertisements of those commodities that the user is interested in but has not noticed, or those commodities that are unexpectedly sophisticated. In other words, it becomes possible to provide advertisements in a manner different from the conventional systems.

In addition, the advertising data is selected based upon the communication speed between the server device and each of the client devices. Therefore, the advertisement is provided in a manner so as to coincide with the communication conditions of the user, and it is possible to avoid unnecessarily increasing the communication load and causing inconvenience on the user side.

Moreover, in the case of good communication environments, both of the image data and sound data are transmitted so as to provide vivid, energetic advertisements, while in the case of poor communication environments, only the sound data is transmitted to reduce the communication load. Thus, it is possible to provide advertisements in a manner so as to coincide with the communication conditions of the user.

Moreover, in the case of good communication environments, full-scale, long-time advertising data is transmitted to provide vivid, energetic advertisements, while in the case of poor communication environments, shortened, short-time advertising data is transmitted to reduce the communication load. Thus, it is possible to provide advertisements in a manner so as to coincide with the communication conditions of the user.

Moreover, in the case of good communication environments, non-compressed advertising data is transmitted to eliminate the load for compressing and decompressing the advertising data, while in the case of poor communication environments, compressed advertising data is transmitted to reduce the communication load for each of communications. Thus, it is possible to provide advertisements in a manner so as to coincide with the communication conditions of the user.

Moreover, in the case of good communication environments, non-divided advertising data is transmitted to eliminate the load for dividing and re-composing the advertising data, while in the case of poor communication environments, divided advertising data is transmitted to reduce the communication load for each of communications. Thus, it is possible to provide advertisements in a manner so as to coincide with the communication conditions of the user.

Moreover, since the control information is added to the advertising data, it is possible to control the output format of the advertising data on each of the client devices by using the control information. Therefore, the output format of the advertising data is properly adjusted depending on the users, the contents of the advertisement and other factors, thereby increasing the advertising effects and publicity to a maximum.

Moreover, since the timing in which the advertising data is outputted is added to the corresponding advertising data, the advertisement is outputted based upon this timing on the client device side. Therefore, the output timing is easily adjusted so that, for example, those advertisements supposed to be outputted at mid night are only supplied at mid night.

Moreover, since the number of times in which the advertising data is outputted is added to the corresponding advertising data, the advertisement is outputted based upon the number of times on the client device side. Therefore, the number of output times is easily adjusted so that, for example, those advertisements that would be effective when repeatedly outputted are outputted many times.

Moreover, since the parameter data that specifies the operation of tracking data for use in animations is added to the advertising data, the animations can be outputted based upon the parameter data on the client device side. Therefore, for example, by displaying animations so as to guide the advertisement, it is possible to further increase the advertising effects and publicity.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An advertising system comprising at least one server device (3) and at least one client device (1) connected to said server device (3), and advertising data is transmitted from said server device (3) to said client device (1), wherein said server device (3) includes,
a user information storage (31, 32) which stores information related to users of the respective client devices (1);
an advertising information storage (33) which stores a plurality of advertising data that have different advertising contents;
an advertisement selection unit (36c) which, based upon the information stored in said user information storage (31, 32), selects advertising data to be transmitted to said client devices (1) from a plurality of advertising data stored in said advertising information storage (33); and
a transmission data generation unit (36d) which generates advertisement transmission data so as to transmit the advertising data selected by said advertisement selection unit (36c) to said client devices (1).

2. The advertising system according to claim 1, wherein
the information stored in said user information storage (31, 32) is information related to attributes of the respective users; and
said advertisement selection unit (36c) selects advertising data in accordance with the attributes of each of the users.

3. The advertising system according to claim 1 or 2, wherein
the information stored in said user information storage (31, 32) is information related to history of the information that has been viewed by each of the users; and
said advertisement selection unit (36c) selects advertising data in accordance with the information that has been viewed by each of the users.

4. The advertising system according to any one of claims 1 to 3, wherein
inter-advertisement-related information which indicates the correlation between a plurality of advertising data is stored in said advertising information storage (33) ; and
said advertisement selection unit (36c) selects advertising data based upon information stored in said user information storage (31, 32), and finally selects advertising data that has a predetermined inter-advertisement relationship with the advertising data based upon the advertising data and the inter-advertisement-related information stored in said advertising information storage (33).

5. An advertising system comprising at least one server device (3) and at least one client device (1) connected to said server device (3), and advertising data is transmitted from said server device (3) to said client device (1), wherein said server device (3) includes,
a communication speed detection unit which detects the communication speed between said server and each of said client devices (1);
an advertising information storage (33) which stores a plurality of advertising data that have mutually different data formats; and
a transmission data generation unit (36d) which, based upon the communication speed detected by the communication speed detection unit, selects advertising data having the corresponding data format, and generates advertisement transmission data for transmitting this advertising data to said client device (1).

6. The advertising system according to claim 5, wherein
image data and sound data are stored in said advertising information storage (33) as the advertising data; and
said transmission data generation unit (36d) generates the advertisement transmission data by selecting both of the image data and the sound data or either of these based upon the communication speed detected by the communication speed detection unit.

7. The advertising system according to claim 5 or 6, wherein
a plurality of advertising data having mutually different output times are stored in said advertising information storage (33); and
said transmission data generation unit (36d) generates the advertisement transmission data by selecting advertisements having any one of output times from said advertising information storage (33) based upon the communication speed detected by the communication speed detection unit.

8. The advertising system according to any one of claims 5 to 7, wherein said transmission data generation unit (36d) generates advertisement transmission data in either a non-compressed manner or a compressed manner based upon the communication speed detected by the communication speed detection unit.

9. The advertising system according to any one of claims 5 to 8, wherein said transmission data generation unit (36d) transmits the advertising data in either a non-divided manner or a divided manner, based upon the communication speed detected by the communication speed detection unit.

10. An advertising system comprising at least one server and at least one client connected to said server, and advertising data is transmitted from said server device (3) to said client device (1), wherein said server device (3) includes,
an advertising information storage (33) which stores a plurality of advertising data that have mutually different data formats;
an advertisement selection unit (36c) which selects advertising data to be transmitted to said client devices (1) from a plurality of advertising data stored in said advertising information storage (33); and
a transmission data generation unit (36d) which generates advertisement transmission data so as to transmit the advertising data selected by said advertisement selection unit (36c) to said client devices (1),
wherein, said transmission data generation unit (36d) being allowed to add control information for controlling the output format of the advertising data in said client devices (1) to the advertisement transmission data.

11. The advertising system according to claim 10, wherein the control information added by said transmission data generation unit (36d) is information related to timing in which the advertising data is outputted by said client devices (1).

12. The advertising system according to claim 10 or 11, wherein the control information added by said transmission data generation unit (36d) is information related to the number of times in which the advertising data is outputted by each of said client devices (1).

13. The advertising system according to any one of claims 10 to 12, wherein the control information added by said transmission data generation unit (36d) is parameter data that specifies the operation of tracking data for use in animations stored in each of said client devices (1).

14. An advertising method of transmitting advertising data from a server device (3) to client devices (1) connected to said server device (3), wherein said server device (3) performs the steps of:
storing information related to users of the respective client devices (1);
storing a plurality of advertising data that have different advertising contents;
based upon the information stored at the user information storing step, selecting advertising data to be transmitted to said client devices (1) from a plurality of advertising data stored at the advertising information storing step; and
generating advertisement transmission data so as to transmit the advertising data selected at the advertisement selection step to said client devices (1).

15. An advertising method of transmitting advertising data from a server device (3) to client devices (1) connected to said server device (3), wherein said server device (3) performs the steps of:
detecting the communication speed between said server and each of said client devices (1);
storing a plurality of advertising data that have mutually different data formats; and
based upon the communication speed detected at the communication speed detection step, selecting advertising data having the corresponding data format, and generating advertisement transmission data for transmitting this advertising data to said client device (1).

16. An advertising method of transmitting advertising data from a server device (3) to client devices (1) connected to said server device (3), wherein said server device (3) performs the steps of:
storing a plurality of advertising data that have mutually different data formats;
selecting advertising data to be transmitted to said client devices (1) from a plurality of advertising data stored at the advertising information storing step; and
generating advertisement transmission data so as to transmit the advertising data selected at the advertisement selection step to said client devices (1),
wherein, the transmission data generation step being allowed to add control information for controlling the output format of the advertising data in said client devices (1) to the advertisement transmission data.

17. A computer-readable recording medium which stores a computer program which when executed on a server device (3) realizes transmission of advertising data from said server device (3) to client devices (1), the computer program executing the steps of:
storing information related to users of the respective client devices (1);
storing a plurality of advertising data that have different advertising contents;
based upon the information stored at the user information storing step, selecting advertising data to be transmitted to said client devices (1) from a plurality of advertising data stored at the advertising information storing step; and
generating advertisement transmission data so as to transmit the advertising data selected by said advertisement selection unit (36c) to said client devices (1).

18. A computer-readable recording medium which stores a computer program which when executed on a server device (3) realizes transmission of advertising data from said server device (3) to client devices (1), the computer program executing the steps of:
detecting the communication speed between said server and each of said client devices (1);
storing a plurality of advertising data that have mutually different data formats; and
based upon the communication speed detected at the communication speed detection step, selecting advertising data having the corresponding data format, and generating advertisement transmission data for transmitting this advertising data to said client device (1).

19. A computer-readable recording medium which stores a computer program which when executed on a server device (3) realizes transmission of advertising data from said server device (3) to client devices (1), the computer program executing the steps of:
storing a plurality of advertising data that have mutually different data formats;
selecting advertising data to be transmitted to said client devices (1) from a plurality of advertising data stored at the advertising information storing step; and
generating advertisement transmission data so as to transmit the advertising data selected at the advertisement selection step to said client devices (1),
wherein, the transmission data generation step being allowed to add control information for controlling the output format of the advertising data in said client devices (1) to the advertisement transmission data.

20. A computer program which when executed on a server device (3) realizes transmission of advertising data from said server device (3) to client devices (1), the computer program executing the steps of:
storing information related to users of the respective client devices (1);
storing a plurality of advertising data that have different advertising contents;
based upon the information stored at the user information storing step, selecting advertising data to be transmitted to said client devices (1) from a plurality of advertising data stored at the advertising information storing step; and
generating advertisement transmission data so as to transmit the advertising data selected by said advertisement selection unit (36c) to said client devices (1).

21. A computer program which when executed on a server device (3) realizes transmission of advertising data from said server device (3) to client devices (1), the computer program executing the steps of:
detecting the communication speed between said server and each of said client devices (1);
storing a plurality of advertising data that have mutually different data formats; and
based upon the communication speed detected at the communication speed detection step, selecting advertising data having the corresponding data format, and generating advertisement transmission data for transmitting this advertising data to said client device (1).

22. A computer program which when executed on a server device (3) realizes transmission of advertising data from said server device (3) to client devices (1), the computer program executing the steps of:
storing a plurality of advertising data that have mutually different data formats;
selecting advertising data to be transmitted to said client devices (1) from a plurality of advertising data stored at the advertising information storing step; and
generating advertisement transmission data so as to transmit the advertising data selected at the advertisement selection step to said client devices (1),
wherein, the transmission data generation step being allowed to add control information for controlling the output format of the advertising data in said client devices (1) to the advertisement transmission data.
